# EUROPÄISCHE PATENTSCHRIFT

(11) **EP 3 819 999 B1**
(45) Veröffentlichungstag und Bekanntmachung des Hinweises auf die Patenterteilung: **26.02.2025**
(21) Anmeldenummer: 20020516.9
(22) Anmeldetag: 10.11.2020
(51) Int. Cl.: H01R 13/717, G02B 6/38, H01R 12/72, H01R 13/627, H01R 24/64, H01R 13/635, H01R 13/633

(54) **EINBAUSTECKVERBINDER**
SINGLE-PIECE CONNECTOR
CONNECTEUR ENFICHABLE À ENCASTRER

(30) Priorität: 11.11.2019 AT 509592019
(43) Veröffentlichungstag der Anmeldung: 12.05.2021
(73) Patentinhaber: Neutrik AG, 9494 Schaan (LI)
(72) Erfinder: Dobler, Oliver, 6774 Tschagguns (AT)
(74) Vertreter: Kaminski Harmann

(56) Entgegenhaltungen:
- EP-A2- 3 462 820
- CN-A- 101 593 900
- CN-A- 101 922 679
- CN-A- 109 869 665
- CN-U- 208 849 186
- US-A- 5 790 041
- US-A1- 2012 190 228

## Beschreibung

Die Erfindung betrifft einen Einbausteckverbinder, mit einem Gehäuse mit einer Einstecköffnung für einen komplementären Kabelsteckverbinder, mit einem in das Gehäuse eingesetzten oder darin ausgebildeten Kontaktträger, mit im Kontaktträger fixierten elektrischen oder optischen Kontakten, und mit einer Frontplatte, die an der Vorderseite des Gehäuses angeordnet ist, sowie eine Einbausteckverbinder-Anordnung, umfassend einen derartigen Einbausteckverbinder und eine damit verbundene Platine.

Derartige Einbausteckverbinder, auch Einbaubuchsen oder Chassisbuchsen bezeichnet, sind zum Einbau in Schalttafeln, Schaltschränken oder auch den Wandungen von Gerätegehäusen vorgesehen und zur Verbindung mit Standard-Leiterplatten bzw. Platinen ausgelegt, die in der Unterhaltungsindustrie Verwendung finden. Sie sind in verschiedensten Ausführungsformen, d.h. mit unterschiedlicher Anzahl und Ausführung der Kontakte, sowie mit verschiedenen Erdungs- und Anschlussvarianten und als Male- und Female-Stecker verfügbar. Sie kommen als elektrische Steckverbinder für die Übertragung von elektrischer Energie oder analoger bzw. digitaler Daten, als auch als optische Steckverbinder für Lichtleiter und optische Kabel zum Einsatz.

Bekannt sind Kabelstecker mit einem von der Nutzleitung versorgten Leuchtmittel, das einen Leuchtring mit drei um jeweils 120 Grad versetzten Fenstern beleuchtet. Weiters ist in der US 6690804 B2 ein System bekannt, bei welchem Mikrofone und deren Kabel mit ansteuerbaren LEDs versehen sind, um durch unterschiedliche Farben die einzelnen Geräte rasch optisch zu unterscheiden. Die Energieversorgung erfolgt über die Phantomspeisungsquelle des Tonmischsystems. Weiters sind auch Chassisbuchsen mit einem die Einstecköffnung umgebenden Kranz aus mehreren in der Einbaubuchse selbst verbaute LEDs bzw. einem schmalen, durch eingebaute LEDs beleuchteten Ring zur Anzeige des Verbindungsstatus bekannt. Damit ist auch hier eine Energieversorgung mit der Gefahr von Störungen der Signalübertragung in die Buchse selbst integriert.

Die CN 208849186 U, NL 1032887 A1, EP 2904982 A1 und DE 102010021587 A1 zeigen Ein- oder Aufbausteckdosen verschiedener Art, welche Lichtquellen und lichtleitende Elemente enthalten. Beispielsweise offenbart die CN 208849186 U einen Ladestecker für den Einbau in Fahrzeuge. Der Stecker weist einen Flansch mit Montagebohrungen und eine diesen Flansch abdeckende Deckplatte mit einem ringförmigen transparenten Bereich auf. Im Flansch eingebettet ist ein lichtleitendes Element, welches komplett unterhalb der transparenten Deckplatte eingeschlossen ist. Das lichtleitende Element wird durch zwei LEDs, welche auf einer Leiterplatte angebracht sind beleuchtet. Dazu wird das Licht über die zwei gegenüberliegenden Stirn- bzw. Endseiten eingekoppelt. Der Ladezustand des Fahrzeuges kann durch Farbänderung angezeigt werden.

NL 1032887 A1 offenbart eine Aufbausteckdose für Anhänger für KFZs. Die Steckdose weist zwei Montagebohrungen auf. Von einem scheibenförmigen Kontaktträger ragen längliche Kontakte parallel zueinander weg, wobei ein Führungszylinder aus lichtleitendem Material auf die Kontakte aufgeschoben ist. Weiters ist eine hohlzylindrische Buchse vorhanden, welche den Zylinder mit den Kontakten ringförmig unter Bildung eines ringförmigen Zwischenraums umgibt, ebenfalls aus lichtleitendem Material angefertigt. Der Führungszylinder und die Buchse werden separat über je zumindest eine LED beleuchtet. Das umhüllende Gehäuse besitzt einen federbelasteten Deckel der im geschlossenen Zustand die gesamte Einstecköffnung abdeckt, und welcher eine gabelförmige Ausnehmung aufweist, mit welcher ein eingesteckter Stecker fixiert/verriegelt werden kann, wobei wieder ein Grossteil der Einstecköffnung abgedeckt ist.

Die EP 2904982 A1 beschreibt einen Buchseneinsatz für ein elektrochirurgisches Gerät. Um die eigentlichen Steckerbuchsen bzw. deren Einstecköffnungen herum sind lichtdurchlässige Rahmen vorgesehen, die beispielsweise als Betriebszustandsanzeige genutzt werden können, wobei Licht von einer Lichtquelle über ein als Lichtleiter ausgebildetes Einschubgehäuse in den lichtdurchlässigen Rahmen eingekoppelt wird. Die Lichtquelle wird dabei vorzugsweise durch eine Hinterleuchtungsleiterplatte mit Leuchtdioden im Gerätegehäuse gebildet. Auch ein entriegelbares Rastmittel für die Kabelstecker ist vorhanden.

DE 102010021587 A1 schliesslich offenbart eine mehrpolige Ladesteckdose für Elektrofahrzeuge mit einem Gehäuse mit Verriegelungsfunktion, welches einen flanschartigen Rand aufweist. Teile des Gehäuses können aus einem lichtdurchlässigen, allenfalls auch farbige, Material bestehen, wobei Lichtquellen im Gehäuse angeordnet sind.

Aufgabe der vorliegenden Erfindung war es, die Nachteile des Standes der Technik zu überwinden und einen Einbausteckverbinder bzw. eine Anordnung mit einem derartigen Verbinder anzugeben, welche eine insbesondere in dunklen Umgebungen leicht und jederzeit möglichst ungehindert erkennbare Zustandsanzeige aufweisen, bei welchen keine Gefahr einer Störung oder Beeinflussung der Nutzsignale besteht und die durch einfachen Aufbau ohne grossen Aufwand hergestellt werden können und vorzugsweise auch die Nachrüstung bei bestehenden Einbausteckverbindern mit ähnlichem Aufbau gestatten.

Diese Aufgabe wird durch eine Vorrichtung gemäss den Ansprüchen gelöst.

Die erfindungsgemässe Vorrichtung ist dazu dadurch gekennzeichnet, dass die Frontplatte aus einem lichtstreuenden oder lichtleitenden Material besteht, zumindest eine Einkoppelfläche für Licht aus einer externen Lichtquelle aufweist und einen umlaufenden und sich nach vorne erhebenden Steg aufweist, der entlang zumindest eines Teils des Umfanges der Einstecköffnung verläuft und das vordere Ende und die äussere Begrenzung der Einstecköffnung bildet. Damit ist die optimale Versorgung und Verteilung des eingekoppelten Lichts sichergestellt und jederzeit die optimale Erkennbarkeit des sichtbaren Abschnittes der Frontplatte gewährleistet, wobei aber die Lichtquelle, deren Energieversorgung und Ansteuerung getrennt vom Einbausteckverbinder selbst und dessen Nutzkontakten ist, so dass die Gefahr der Beeinflussung der Nutzsignale durch die Beleuchtungsanordnung minimiert ist.

Bevorzugt besteht die Frontplatte aus farblosem Material. Damit können mit nur einer Frontplatte durch Verwendung von Lichtquellen mit unterschiedlicher Färbung unterschiedliche Farben und auch wechselnde Farben dargestellt werden.

Eine bevorzugte Ausführungsform eines erfindungsgemässen Einbausteckverbinders sieht zur Ermöglichung des Einbaus hinter die Wände von Geräten, Schalttafeln od. dgl. vor, dass das Gehäuse und die Frontplatte korrespondierende Montageabschnitte aufweisen, die zur Achse der Einstecköffnung radial auskragen und mit zumindest einer Montagebohrung versehen sind.

Bei einem derartigen Einbausteckverbinder ist vorzugsweise die Einkoppelfläche an zumindest einem der Montageabschnitte der Frontplatte angeordnet. Damit ist es möglich, die Einkoppelfläche sehr frei und optimal auf die Einkopplung der jeweils verwendeten Lichtquelle zu gestalten.

Weiters sieht eine bevorzugte Variante dabei vor, dass die Einkoppelfläche radial orientiert ist, wobei vorzugsweise vorgesehen ist, dass sich der Querschnitt des Montageabschnitts zur Einkoppelfläche hin vergrössert. Dies gestattet die einfache Einkopplung einer benachbart der Frontplatte angeordneten Lichtquelle und die optimale Lichtleitung mit Konzentration des eingekoppelten Lichtes auf den Querschnitt des jedenfalls zu beleuchtenden Teils der Frontplatte.

Eine weitere optionale Ausführungsform der Erfindung sieht einen Einbausteckverbinder vor, bei welchem im Gehäuse eine Ausnehmung für eine Verriegelungsanordnung für den Kabelstecker ausgearbeitet ist, wobei die Verriegelungsanordnung ein nach vorne aus dem Gehäuse ragendes Entriegelungselement umfasst, und wobei die Frontplatte einen Ausschnitt zur Durchführung des Entriegelungselementes aufweist.

Eine Lösung der eingangs gestellten Aufgabe ist auch durch eine Einbausteckverbinder-Anordnung möglich, die einen Einbausteckverbinder gemäss einem der vorhergehenden Absätze sowie eine damit verbundene Platine umfasst. Diese Anordnung ist weiters dadurch gekennzeichnet, dass auf der Platine eine Lichtquelle und deren Steuerung und Energieversorgung vorgesehen sind und zumindest die Lichtquelle unmittelbar benachbart der Einkoppelstelle angeordnet ist. Damit bleibt die Lichtversorgung potentialmässig getrennt von den Nutzkontakten und kann die Signalübertragung nicht beeinflussen.

Vorzugsweise ist die Lichtquelle zur Emission von Licht zumindest zweier unterschiedlicher Farben ausgestaltet bzw. ansteuerbar, um die einzelnen Buchsen zu unterscheiden und/oder zur Anzeige des jeweiligen Verbindungsstatus.

Eine alternative Ausführungsform der Erfindung sieht dann vor, dass die Steuerung der Lichtquelle mit einer Schaltung zur Feststellung unterschiedlicher Zustände der Anordnung gekoppelt ist und die Steuerung derart ausgelegt ist, dass unterschiedliche Zustände durch die Emission von Licht unterschiedlicher Farbe gekennzeichnet ist.

Bevorzugt weist die Lichtquelle als Leuchtmittel LEDs oder OLEDs auf.

Zum besseren Verständnis der Erfindung wird diese anhand der nachfolgenden Figuren näher erläutert.

Es zeigen jeweils in stark vereinfachter, schematischer Darstellung:
- Fig. 1: eine Einbausteckverbinder-Anordnung in Form einer RJ45-Chassisbuchse in perspektivischer Darstellung von vorne;
- Fig. 2: das Gehäuse des Einbausteckverbinders der Anordnung der Fig. 1 mit eingesetzten Kontakten in perspektivischer Darstellung von vorne;
- Fig. 3: die erfindungsgemäss gestaltete Frontplatte des Einbausteckverbinders der Anordnung der Fig. 1 in perspektivischer Ansicht von vorne;
- Fig. 4: die erfindungsgemäss gestaltete Frontplatte des Einbausteckverbinders der Anordnung der Fig. 1 in perspektivischer Ansicht von hinten;
- Fig. 5: einen Längsschnitt durch die Einbausteckverbinder-Anordnung der Fig. 1, eingesetzt in die Wand eines Gerätes od. dgl., und
- Fig. 6: eine perspektivische Ansicht von oben einer Platine für die Einbausteckverbinder-Anordnung der Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäss auf die neue Lage zu übertragen.

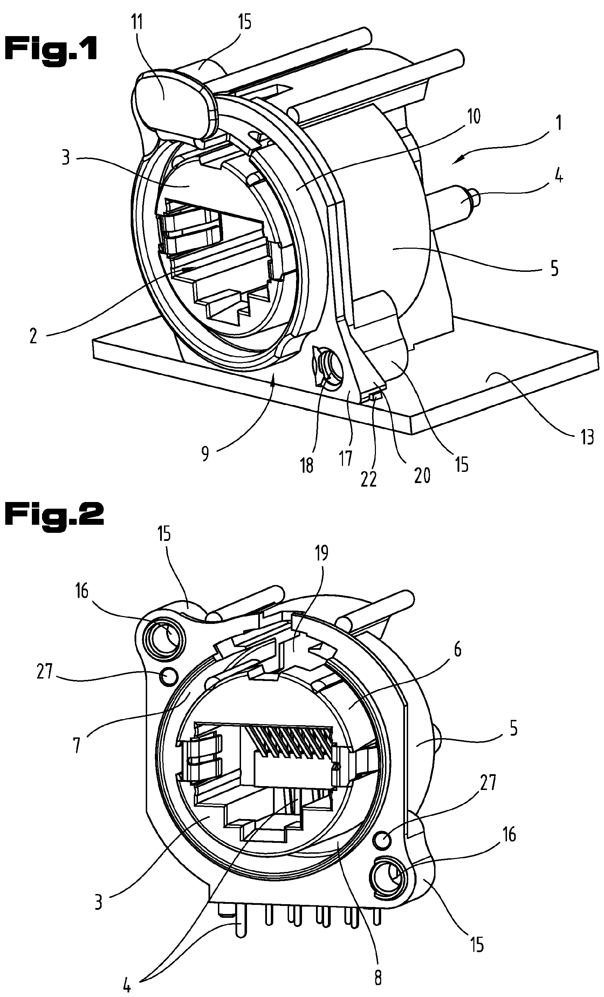

Die Erfindung wird nachfolgend anhand eines in Fig. 1 in seiner Gesamtheit abgebildeten elektrischen Einbausteckverbinders erläutert, der in einer Form als RJ45-Buchse für die Datenübertragung ausgelegt ist. Es können aber alle Arten von Energie- und Datenstecker entsprechend den erfindungsgemässen Merkmalen ausgeführt sein, beispielsweise nach XLR-Standard, in Male- oder Female-Ausführung, etc. Auch optische Einbausteckverbinder können erfindungsgemäss im Wesentlichen gleich aufgebaut sein.

In einem Gehäuse 1 mit einer Einstecköffnung 2 für einen komplementären Kabelsteckverbinder ist ein Kontaktträger 3 eingesetzt. Die im Kontaktträger 3 fixierten Kontakte 4 ragen auf der Hinterseite des Gehäuses 1 heraus. Das Gehäuse 1 ist - wie in Fig. 2 besser zu erkennen ist - aufgebaut aus zwei konzentrisch angeordneten Gehäuseteilen, einem äusseren Gehäuseteil 5 und einem inneren Gehäuseteil 6, die durch einen Ringspalt 7 beabstandet sind, wobei dieser Ringspalt 7 eine ringförmige Einstecköffnung für einen buchsenförmigen Steckerfortsatz eines komplementären Kabelsteckverbinders bildet. Ein ringförmiger Boden 8 verbindet die beiden Gehäuseteile 5, 6 an dem der Einstecköffnung 2 gegenüberliegenden Ende des Gehäuses 1 miteinander. Der Kontaktträger 3 kann dabei bevorzugt ein integraler Teil bzw. Abschnitt des Gehäuses 1 sein, er kann aber auch als separater Teil ausgeführt und in eine korrespondierende Aufnahme im Gehäuse 1 eingesetzt sein. Im gegenständlichen Ausführungsbeispiel ist diese Aufnahme der innenliegende Gehäuseteil 6 in welchen der Kontaktträger 3 eingeschoben ist. Bei dieser Konstruktionsart ist typischerweise das Gehäuse 1 aus Metall angefertigt und der Kontaktträger 3 aus isolierendem Werkstoff, vorzugsweise Kunststoff. Bei Kunststoffgehäusen ist der Kontaktträger 3 vorzugsweise einstückig mit dem Gehäuse 1 als dessen zentraler Abschnitt vorgesehen.

An der Vorderseite des Gehäuses 1 ist eine Frontplatte 9 angeordnet und umgibt den vorderen Abschnitt des Kontaktträgers 3. Die Frontplatte 9, die vorzugsweise auf der Vorderseite des Gehäuses 1 aufliegt und/oder zumindest zu einem wesentlichen Teil abdeckt, weist einen umlaufenden und sich nach vorne erhebenden Steg 10 auf, der entlang zumindest eines Teils, vorzugsweise des grössten Teils, des Umfanges der Einstecköffnung 2 verläuft und dabei das vordere Ende und die äussere Begrenzung der Einstecköffnung 2 bildet.

Die in Fig. 1 dargestellte Einbausteckverbinder-Anordnung umfasst weiters noch einen Verriegelungsmechanismus den eingesteckten komplementären Steckverbinder, um dessen ungewolltes Abziehen und damit ein Lösen der Steckverbindung zu verhindern. Dieser Mechanismus weist zur beabsichtigten Entriegelung der Verbindung ein Entriegelungselement 11 auf, welches durch Ausnehmungen 19 im Gehäuse 1 bzw. Ausnehmungen der Frontplatte 9, insbesondere durch Ausschnitte 12 im Steg 10 an der Aussenseite der Einstecköffnung 2 nach vorne wegragt. Das Entriegelungselement 11 überdeckt dabei aber nicht den Ringspalt 7 der Einstecköffnung und den davon eingeschlossenen Bereich der Einstecköffnung und des Kontaktträgers 3, so dass jederzeit die Frontplatte 9 oder zumindest der Steg 10 davon sichtbar ist.

In Fig. 1 ist schliesslich noch die Leiterplatte bzw. Platine 13 dargestellt, hier horizontal angeordnet, wobei das Gehäuse 1 und die Kontakt 4 dann mit abgewinkelten Endstücken versehen sind.

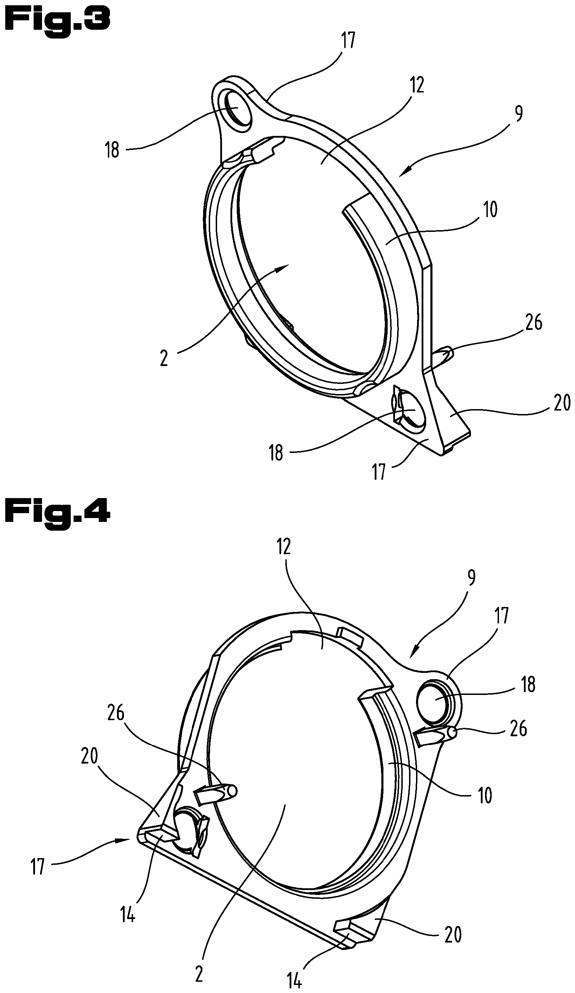

Die in den Fig. 3 und 4 einzeln dargestellte Frontplatte ist aus einem lichtstreuenden oder lichtleitenden Material angefertigt. Sie weist zumindest eine Einkoppelfläche 14 für Licht aus einer externen Lichtquelle 22 auf. Vorzugsweise sind für den Fall einer horizontalen Leiterplattenmontage zwei Einkoppelflächen 14 auf beiden Seiten des Gehäuses 1 unmittelbar benachbart zur Platine 13 vorhanden. Diese Einkoppelflächen 14 sind im vorliegenden Fall tangential orientiert, d.h. deren Flächennormale verläuft tangential zur Einstecköffnung 2. Auch eine radiale Anordnung der Einkoppelflächen 14 ist sehr zweckmässig, um Licht in die Frontplatte 9 einzukoppeln, die bevorzugt zur Verwendung mit Lichtquellen 22 beliebiger Farbe selbst aus farblosem Material angefertigt ist. Auch andere Varianten der Orientierung der Einkoppelflächen 14 sind möglich. So können die Einkoppelflächen 14 beispielsweise nach hinten orientiert sein und vorzugsweise in einer Ebene senkrecht zur Längsachse des Einbausteckverbinders liegen, um mit Licht von einer Lichtquelle 22 vertikal an der Hinterseite des Gehäuses 1 angebauten Leiterplatte 13 versorgt zu werden.

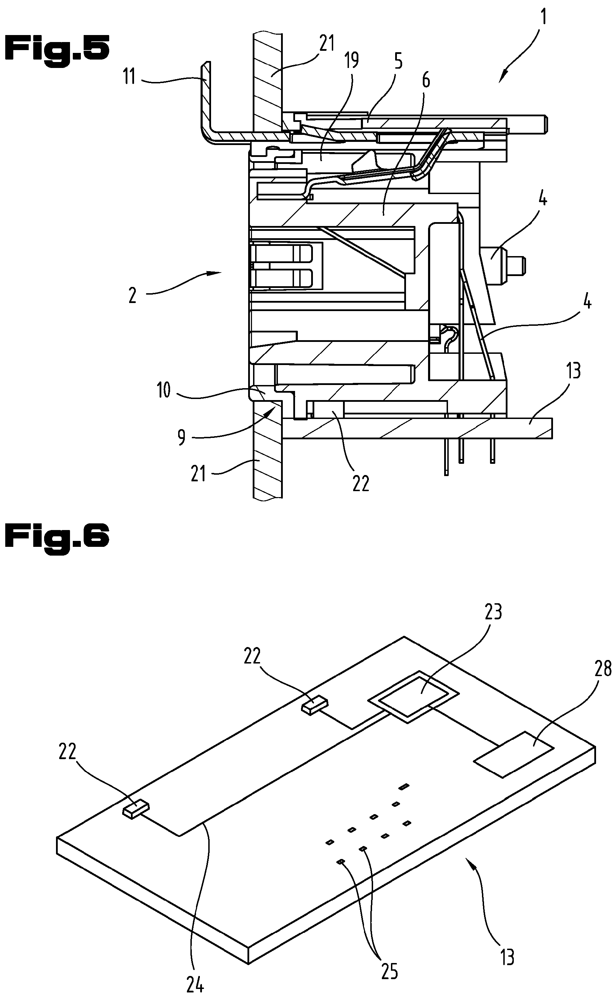

Da die erfindungsgemässen Einbausteckverbinder-Anordnungen zum Einbau in Geräte oder Schaltschränke, Schalttafeln od. dgl. vorgesehen sind, weist zumindest das Gehäuse 1 entlang des Umfanges Montageabschnitte 15 auf, in welchen Montagebohrungen 16 ausgearbeitet sind, um die Anordnung an der Wand 21 des Gerätes oder der Schalttafel od. dgl. zu befestigen (wie dies beispielhaft im Längsschnitt der Fig. 5 zu sehen ist).

In Fig. 5 ist eine bevorzugte Ausführungsform des Einbausteckverbinders dargestellt, der zum Einbau hinter der Wand von Schalttafeln, Schaltschränken oder auch an der Hinterseite der Wandungen von Gerätegehäusen konstruiert ist. In diesem Fall liegt die Frontplatte 9 an der Hinterseite der jeweiligen Wand an, wobei der Steg 10 vorzugsweise eine derartige Höhe aufweist, dass er zumindest in Höhe der Aussenseite der Wand der Schalttafel, des Schaltschrankes oder des Gerätegehäuses endet oder bevorzugt sogar etwas über die Aussenseite der Wand übersteht. Bei vorhandener vorderer Abdeckplatte bzw. Flansch weist der Steg 10 bevorzugt eine Höhe auf, dass er zumindest in Höhe der Aussenseite der Abdeckplatte bzw. des Flansches endet oder bevorzugt sogar etwas über deren vordere Fläche übersteht. Die Abdeckplatte bzw. der Flansch weist dann bevorzugt mit den Ausnehmungen 19 fluchtende Ausnehmungen auf, durch welche das Entriegelungselement 11 hindurchgeführt ist.

Der erfindungsgemässe Einbausteckverbinder könnte auch für den Einbau von vorne her konstruiert, wobei bevorzugt ebenfalls eine vordere Abdeckplatte bzw. ein Flansch vorgesehen ist. Für die Ausbildung der Frontplatte 9, des Steges 10 und der weiteren Bauelemente sind die gleichen Merkmale wie im vorigen Absatz erläutert vorgesehen.

Bevorzugt ist sind auch an der Frontplatte 9 an korrespondierenden Stellen Montageabschnitte 17 mit Montagebohrungen 18 vorhanden. Hier ist besonders bevorzugt die Anordnung der Einkoppelflächen 14 an zumindest einem der Montageabschnitte 17 der Frontplatte 9. Wie insbesondere in Fig. 5 deutlich zu erkennen ist, ist bevorzugt zwischen der Frontplatte 9, d.h. den beleuchtet darzustellenden Bereichen, und den Einkoppelflächen 14 ein sich querschnittsmässig zur Einkoppelfläche 14 vergrössernder Abschnitt 20 vorgesehen. Der Abschnitt 20 kann keilförmig, pyramidenförmig, kegelförmig oder in ähnlicher Weise gestaltet sein.

Auf der dem Gehäuse 1 zugewandten Rückseite der Frontplatte 9 sind weiters bevorzugt noch Zapfen 26 angeordnet und ragen senkrecht und parallel zur Längsachse des Gehäuses 1 auf dieses zu. Sie greifen, wenn die Frontplatte 9 am Gehäuse 1 zum Anliegen aufgesteckt wird, in Bohrungen 27 an der Aussenseite des Gehäuses 1, vorzugsweise des äusseren Gehäuseteils 5, ein und sorgen für die korrekte Positionierung von Gehäuse 1 und Frontplatte 9 relativ zueinander. Weiters sind diese beiden Bauteile dann für die Handhabung und speziell für den Einbau in ein Gerät, eine Schalttafel, einen Schaltschrank od. dgl. gekoppelt und als ein gemeinsamer Teil handhabbar, was den Einbau wesentlich vereinfacht.

Die Lichtquelle 22 für das in die Frontplatte 9 über die Einkoppelflächen 14 einzukoppelnde Licht ist bevorzugt auf der Leiterplatte oder Platine 13 montiert. Das eigentliche Leuchtmittel, vorzugsweise LEDs oder OLEDs, ist dabei vorzugsweise unmittelbar benachbart der Einkoppelfläche 14 angeordnet. Auch die Steuerung 23 und Energieversorgung der Lichtquelle, beides über Kabel oder auch Leiterbahnen 24 auf der Platine 13, bleiben damit potentialmässig getrennt von den Kontakten 4. Für Einbausteckverbinder ohne Platine 13 sind auch andere Arten der Anordnung von Lichtquellen 22 möglich, beispielsweise die "fliegende" Anordnung von drahtgebundenen Lichtquellen 22, vorzugsweise LEDs oder OLEDs.

Vorzugsweise ist die Lichtquelle 22 zur Emission von Licht zumindest zweier unterschiedlicher Farben ausgestaltet bzw. ansteuerbar, wozu beispielsweise mehrere Leuchtmittel in unterschiedlichen Farben verwendet werden können. Die Steuerung 23 der Lichtquelle 22 kann allenfalls mit einer Schaltung 27 zur Feststellung unterschiedlicher Zustände der Einbausteckverbinder-Anordnung gekoppelt und derart ausgelegt sein, dass unterschiedliche Zustände durch die Emission von Licht unterschiedlicher Farbe angezeigt werden. Die Montagestellen 25 auf der Platine 13 für die Kontakte 4 sind ebenfalls dargestellt.

Die Frontplatte 9 kann betreffend ihrer Abmessungen und Gestaltung - mit Ausnahme der für die Kompatibilität nicht wesentlichen Einkoppelflächen 14 und Abschnitte 20 mit sich änderndem Querschnitt - gleich den üblicherweise verwendeten Frontplatten ausgebildet sind, so dass auch die nachträgliche Umrüstung bestehender Einbausteckverbinder möglich ist, zusammen mit der Anbringung der Lichtquellen 22 und deren Steuerung 23 auf den bereits vorhandenen Platinen 13.

So kann auch für bestehende, umgerüstete Einbausteckverbinder-Anordnungen der allen erfindungsgemässen Anordnungen gemeinsame Vorteil einer visuellen Identifikation bzw. einer optischen Anzeige des Verbindungsstatus erreicht werden. Auch die Möglichkeit besteht, über noch mehr Farben unterschiedliche Diagnosemeldungen zu visualisieren.

### Bezugszeichenaufstellung

- 1: Gehäuse
- 2: Einstecköffnung
- 3: Kontaktträger
- 4: Kontakt
- 5: Äusserer Gehäuseteil

- 6: Innerer Gehäuseteil
- 7: Ringspalt
- 8: Boden
- 9: Frontplatte
- 10: Steg

- 11: Entriegelungselement
- 12: Ausschnitt
- 13: Platine
- 14: Einkoppelfläche
- 15: Montageabschnitt

- 16: Montagebohrung
- 17: Montageabschnitt
- 18: Montagebohrung
- 19: Ausnehmung
- 20: Abschnitt mit zunehmendem Querschnitt

- 21: Wand
- 22: Lichtquelle
- 23: Steuerung
- 24: Leiterbahn
- 25: Kontaktstellen

- 26: Zapfen
- 27: Bohrung
- 28: Schaltung

## Patentansprüche

1. Einbausteckverbinder, mit einem Gehäuse (1) mit einer Einstecköffnung (2) für einen komplementären Kabelsteckverbinder, mit einem in das Gehäuse (1) eingesetzten oder darin ausgebildeten Kontaktträger (3), mit im Kontaktträger (3) fixierten elektrischen oder optischen Kontakten (4), und mit einer Frontplatte (9), die an der Vorderseite des Gehäuses (1) angeordnet ist, **dadurch gekennzeichnet, dass** die Frontplatte (9) auf der Vorderseite des Gehäuses (1) aufliegt und/oder diese zumindest zu einem wesentlichen Teil abdeckt, aus einem lichtstreuenden oder lichtleitenden Material besteht, zumindest eine Einkoppelfläche (14) für Licht aus einer externen Lichtquelle (22) aufweist und einen umlaufenden und sich nach vorne erhebenden Steg (10) aufweist, der entlang zumindest eines Teils des Umfanges der Einstecköffnung (2) verläuft und das vordere Ende und die äussere Begrenzung der Einstecköffnung (2) bildet.

2. Einbausteckverbinder nach Anspruch 1, **dadurch gekennzeichnet, dass** die Frontplatte (9) aus farblosem Material besteht.

3. Einbausteckverbinder nach Anspruch 1 oder 2, **dadurch gekennzeichnet, dass** das Gehäuse (1) und die Frontplatte (9) korrespondierende Montageabschnitte (15, 17) aufweisen, die zur Achse der Einstecköffnung (2) radial auskragen und mit zumindest einer Montagebohrung (16, 18) versehen sind.

4. Einbausteckverbinder nach Anspruch 3, **dadurch gekennzeichnet, dass** die Einkoppelfläche (14) an zumindest einem der Montageabschnitte (17) der Frontplatte (9) angeordnet ist.

5. Einbausteckverbinder nach Anspruch 4, **dadurch gekennzeichnet, dass** die Einkoppelfläche (14) radial oder tangential orientiert ist, wobei vorzugsweise vorgesehen ist, dass sich der Querschnitt des Montageabschnitts (20) zur Einkoppelfläche (14) hin vergrössert.

6. Einbausteckverbinder nach einem der Ansprüche 1 bis 5, **dadurch gekennzeichnet, dass** im Gehäuse (1) eine Ausnehmung (19) für eine Verriegelungsanordnung für einen Kabelstecker ausgearbeitet ist, wobei die Verriegelungsanordnung ein nach vorne aus dem Gehäuse (1) ragendes Entriegelungselement (11) umfasst, und wobei die Frontplatte (9) einen Ausschnitt (12) zur Durchführung des Entriegelungselementes (11) aufweist.

7. Einbausteckverbinder-Anordnung, umfassend einen Einbausteckverbinder gemäss einem der Ansprüche 1 bis 6, sowie eine damit verbundene Platine (13), **dadurch gekennzeichnet, dass** auf der Platine (13) eine Lichtquelle (22) und deren Steuerung (23) und Energieversorgung vorgesehen sind und zumindest die Lichtquelle (22) unmittelbar benachbart der Einkoppelfläche (14) angeordnet ist.

8. Anordnung nach Anspruch 7, **dadurch gekennzeichnet, dass** die Lichtquelle (22) zur Emission von Licht zumindest zweier unterschiedlicher Farben ausgestaltet bzw. ansteuerbar ist.

9. Anordnung nach Anspruch 8, **dadurch gekennzeichnet, dass** die Steuerung (23) der Lichtquelle (22) mit einer Schaltung (28) zur Feststellung unterschiedlicher Zustände der Anordnung gekoppelt ist und die Steuerung (23) derart ausgelegt ist, dass unterschiedliche Zustände durch die Emission von Licht unterschiedlicher Farbe gekennzeichnet ist.

10. Anordnung nach einem der Ansprüche 8 oder 9, **dadurch gekennzeichnet, dass** die Lichtquelle (22) als Leuchtmittel LEDs oder OLEDs aufweist.

## Claims

1. A chassis connector comprising a housing (1) with an insertion opening (2) for a complementary cable connector, with a contact carrier (3) inserted in the housing (1) or formed therein, with electrical or optical contacts (4) fixed in the contact carrier (3), and with a front plate (9) which is arranged on the front side of the housing (1), **characterized in that** the front plate (9) is supported on the front side of the housing (1) and/or covers at least a substantial part of the housing (1), is made of a light-dispersing or light-conducting material, has at least one coupling surface (14) for light from an external light source (22) and has a circumferential ridge (10) that is raised toward the front, which ridge (10) extends along at least a part of the circumference of the insertion opening (2) and forms the front end and the outer delimitation of the insertion opening (2).

2. The chassis connector according to claim 1, **characterized in that** the front plate (9) consists of a colorless material.

3. The chassis connector according to claim 1 or 2, **characterized in that** the housing (1) and the front plate (9) have corresponding mounting sections (15, 17), which radially protrude with respect to the axis of the insertion opening (2) and are provided with at least one mounting bore (16, 18).

4. The chassis connector according to claim 3, **characterized in that** the coupling surface (14) is arranged on at least one of the mounting sections (17) of the front plate (9).

5. The chassis connector according to claim 4, **characterized in that** the coupling surface (14) is oriented radially or tangentially, wherein it is preferably provided that the cross-section of the mounting section (20) increases toward the coupling surface (14).

6. The chassis connector according to one of claims 1 to 5, **characterized in that** a recess (19) for a locking arrangement for the cable plug is formed in the housing (1), wherein the locking arrangement comprises an unlocking element (11) protruding forward out of the housing (1), and wherein the front plate (9) has a cutout (12) for passing through the unlocking element (11).

7. A chassis connector arrangement comprising a chassis connector according to one of claims 1 to 6 as well as a circuit board (13) connected thereto, **characterized in that** a light source (22) and its control (23) and energy supply are provided on the circuit board (13), and at least the light source (22) is arranged immediately adjacent to the coupling surface (14).

8. The arrangement according to claim 7, **characterized in that** the light source (22) is configured and/or controllable for emitting light of at least two different colors.

9. The arrangement according to claim 8, **characterized in that** the control (23) of the light source (22) is coupled with a circuit (28) for determining different statuses of the arrangement, and the control (23) is designed such that different statuses are marked by the emission of light in different colors.

10. The arrangement according to one of claims 8 or 9, **characterized in that** the light source (22) has LEDs or OLEDs as lighting means.

## Revendications

1. Connecteur à encastrer, doté d'un boîtier (1) avec une ouverture d'enfichage (2) pour un connecteur de câble complémentaire, doté d'un support de contact (3) inséré dans le boîtier (1) ou réalisé à l'intérieur de celui-ci, avec des contacts (4) électriques ou optiques fixés dans le support de contact (3), et doté d'une plaque frontale (9), laquelle est disposée sur la face avant du boîtier (1), **caractérisé en ce que** la plaque frontale (9), laquelle est disposée sur la face avant du boîtier (9) et/ou recouvre celle-ci au moins sensiblement, est constituée d'un matériau translucide ou transparent, comporte au moins une surface d'entrée (14) pour la lumière provenant d'une source lumineuse externe (22) et comporte une traverse (10) érigée vers l'avant, laquelle s'étend le long d'au moins une partie du pourtour de l'ouverture d'enfichage (2) et forme l'extrémité avant et la limite externe de l'ouverture d'enfichage (2).

2. Connecteur à encastrer selon la revendication 1, **caractérisé en ce que** la plaque frontale (9) est constituée de matériau incolore.

3. Connecteur à encastrer selon la revendication 1 ou 2, **caractérisé en ce que** le boîtier (1) et la plaque frontale (9) comportent des sections de montage (15, 17) correspondantes, lesquelles sont en surplomb radial par rapport à l'axe de l'ouverture d'insertion (2) et sont munies d'au moins un alésage de montage (16, 18).

4. Connecteur à encastrer selon la revendication 3, **caractérisé en ce que** la surface d'entrée (14) est disposée sur au moins une des sections de montage (17) de la plaque frontale (9).

5. Connecteur à encastrer selon la revendication 4, **caractérisé en ce que** la surface d'entrée (14) est orientée de manière radiale ou tangentielle, dans lequel il est de préférence prévu que le diamètre de la section de montage (20) s'agrandisse vers la surface d'entrée (14).

6. Connecteur à encastrer selon l'une des revendications 1 à **5, caractérisé en ce qu'**un évidement (19) est ménagé dans le boîtier (1) pour un dispositif de verrouillage pour un connecteur de câble, dans lequel le dispositif de verrouillage comprend un élément de déverrouillage (11) saillant hors du boîtier (1), et dans lequel la plaque frontale (9) comporte une échancrure (12) destinée au passage de l'élément de déverrouillage (11).

7. Dispositif de connecteur à encastrer, comportant un connecteur à encastrer selon l'une des revendications 1 à 6, ainsi qu'une platine (13) reliée à celui-ci, **caractérisé en ce qu'**une source lumineuse (22) et la commande (23) de celle-ci sont prévues sur la platine (13) et au moins la source lumineuse (22) est disposée de manière directement adjacente à la surface d'entrée (14).

8. Dispositif selon la revendication 7, **caractérisé en ce que** la source lumineuse (22) est configurée et commandable pour émettre de la lumière d'au moins deux couleurs différentes.

9. Dispositif selon la revendication 8, **caractérisé en ce que** la commande (23) de la source lumineuse (22) est couplée à un circuit (28) destiné à établir différents états du dispositif et la commande (23) est disposée de telle sorte que différents états sont **caractérisés par** l'émission de différentes couleurs de lumière.

10. Dispositif selon l'une des revendications 8 ou 9, **caractérisé en ce que** la source lumineuse (22) comporte en tant que luminaires des LED ou des OLED.
